# EUROPEAN PATENT SPECIFICATION

(11) **EP 3 501 780 B1**
(45) Date of publication and mention of the grant of the patent: **07.06.2023**
(21) Application number: 18212752.2
(22) Date of filing: 14.12.2018
(51) Int. Cl.: B29C 43/46, B29C 48/35, B29D 30/60, B29C 48/30, B29C 48/07, B29D 30/30

(54) **RUBBER STRIP MANUFACTURING METHOD AND APPARATUS**
VERFAHREN UND VORRICHTUNG ZUR HERSTELLUNG VON GUMMIBÄNDERN
PROCÉDÉ ET APPAREIL DE FABRICATION DE BANDE DE CAOUTCHOUC

(30) Priority: 19.12.2017 US 201715846832
(43) Date of publication of application: 26.06.2019
(73) Proprietor: The Goodyear Tire & Rubber Company, Akron, OH 44316 (US)
(72) Inventor: BENZING, James Alfred, II, North Canton, OH 44720 (US)
(74) Representative: Kutsch, Bernd

(56) References cited:
- EP-A1- 1 607 209
- EP-A1- 3 112 141
- EP-A2- 0 497 582
- EP-A2- 1 769 905
- EP-B1- 1 607 209
- EP-B2- 1 769 905
- WO-A1-2017/198465
- JP-A- 2011 224 935
- US-A- 4 576 563
- US-A- 4 744 745

## Description

### Field of the Invention

The invention relates generally to rubber processing, and more particularly to a method and apparatus for making a strip of rubber.

### Background of the Invention

The invention describes a method and apparatus to make a strip of rubber material useful for tire building. Typical prior art methods of making a rubberized strip generally utilize expensive equipment such as gear pumps and extruders. Extruders operate typically at very high pressure and require large amounts of horsepower in order to form a small strip. Also, extruders are expensive, and, if not used properly, may overheat or overwork the rubber. Thus, an apparatus and method of efficiently producing a rubber strip is desired.

EP-A- 0 497 582 describes an apparatus for forming a strip of rubber in accordance with the preamble of claim 1.

WO-A- 2017/198465 describes a tire manufacturing method and system for controlling a product profile having one or more elastomeric layers that are produced by continuously extruding an elongated element of an elastomeric material and depositing it upon a forming surface of a circumferentially rotating drum.

US 4,744,745 discloses a variable contour rubber extruder comprising a rotary driving roller, a main body forming an eccentric arc chamber with a rotary driving roller, and a movable mouth piece.

US 4,576,563 and EP-A-1607209 disclose further rotary roll-type rubber extruders.

### Summary of the Invention

The invention relates to an apparatus in accordance with claim 1 and to a method in accordance with claim 10.

Dependent claims refer to preferred embodiments of the invention.

One or more embodiments of the present invention provide an apparatus for forming a strip of rubber, the apparatus comprising a support frame, a first and second roller mounted on the support frame, wherein the first and second rollers are spaced apart from each other, and an application roller located adjacent a head, and a channel formed in the space between the head and the outer surface of the application roller and the inner surface of the head. The channel has an inlet and an outlet, wherein the inlet is located near the second roller and wherein the outlet is located adjacent a die.

Preferably, the first and second rollers are spaced apart in the range of from 2.54 cm to 12.7 cm, more preferably 4 to 7 cm.

The channel preferably decreases in area from the inlet to the outlet.

The first and second rollers are preferably heated, more preferably heated at different temperatures. The second roller is preferably heated to a higher temperature than the temperature of the first roller.

The second roller preferably rotates at a faster rpm than the first roller.

The application roller has a first conical side and a second conical side joined together by a band.

The head preferably has a curved lower surface.

In a preferred embodiment, the head has a curved lower surface, wherein the lower surface of the head has a V shaped groove. Preferably, a narrow end of the V shaped groove terminates in a die. In a preferred embodiment, the die is rectangular shaped.

In a preferred aspect of the invention, the angle of the apparatus with the vertical axis is adjustable.

In a preferred aspect of the invention, the rollers are aligned in the vertical direction.

One or more embodiments of the present invention provide a method of forming a rubber strip comprising the steps of providing a support frame with a first and second roller mounted thereon, wherein the first and second rollers are spaced apart from each other and threading a rubber stock about the first and second roller, and then through a channel formed between a head and a rotating application roller, and then through an outlet die.

### Brief Description of the Drawings

The invention will be described by way of example and with reference to the accompanying drawings in which:
Figure 1 is a front perspective view of a strip forming apparatus of the present invention;
Figure 2 is a closeup view of the strip forming apparatus of Figure 1 shown with only half of the application roller for clarity;
Figure 3 is a front view of the applicator wheel of Figure 2;
Figure 4 is a front perspective view of the strip forming apparatus illustrating the path of the rubber;
Figures 5 and 6 are a side views of a second embodiment of a milltruder head and the application roller from different angles; and
Figure 7 is a bottom view of the milltruder head of Figure 5.

### Detailed Description of Example Embodiments of the Invention

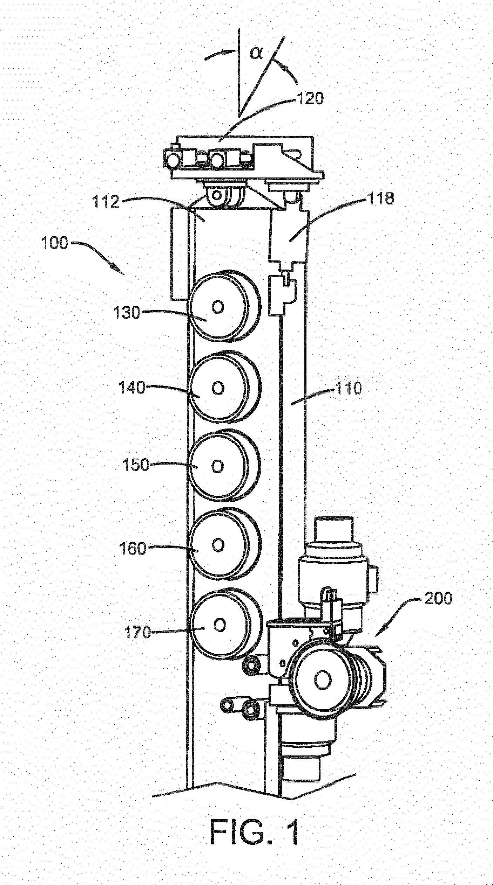

Referring to FIG. 1, a strip forming apparatus 100 is shown. The strip forming apparatus 100 includes a mounting frame 110 that is preferably rectangular in shape, with a significantly longer vertical length than width. The mounting frame 110 has an upper end 112 that is preferably pivotally mounted to a servomechanism 120. The servomechanism 120 functions to traverse the mounting frame forward and aft. The mounting frame 110 preferably hangs vertically on the servomechanism allowing the stitching pressure to be adjusted by the traverse position. The angle α that the strip forming apparatus makes with the vertical direction may preferably be adjusted by a second servo mechanism 118. In order to adjust the stitching pressure, the angle α of the strip forming apparatus can be varied. Variation of the angle changes the stitching pressure. Very low stitching pressure can be achieved which is required for small rubber strips. The stitching pressure can be adjusted by the traverse position of the strip forming apparatus in relation to a tire building drum, as described in more detail below.

As shown in Figure 1, the mounting frame 110 has a length L and a width W, wherein the length L is preferably aligned with the vertical direction. The length/width ratio is preferably greater than 10. The mounting frame 110 has a plurality (at least two) of spaced apart preheat rollers 130, 140, 150, 160, 170 that are positionally fixed and rotatably mounted on the frame 110. The preheat rollers 130-170 are preferably aligned in the vertical direction so that the centers of each roller are preferably in a straight line. Each roller is spaced apart from an adjacent roller in a range of from 2.54 cm to 12.7 cm, preferably 4 to 7 cm. The rollers are not calendaring the rubber, as they are spaced apart. Calendering involves forming a shape between two rollers.

Each preheat roller 130, 140, 150, 160, 170 has internal heaters (not shown). Preferably, each preheat roller 130, 140, 150, 160, 170 is heated to a different temperature than the other preheat rollers 130, 140, 150, 160, 170. Preferably, the preheat rollers 130, 140, 150, 160, 170 are progressively heated to a higher temperature so that the first preheat roller 130 is the coolest roller, while the second preheat roller 140 is heated to a higher temperature than the first preheat roller 130. The third preheat roller 150 is heated to a higher temperature than the second preheat roller 140, and the fourth preheat roller 160 is heated to a higher temperature than the third preheat roller 150. Likewise, the fifth preheat roller 170 is heated to a higher temperature than the fourth preheat roller 160. In summary, the preheat rollers are preferably maintained at progressively higher temperatures, increasing in temperature in the incremental range of preferably 5-20 degrees Celsius per roller with decreasing height of the mounting frame, so that the first or highest roller 130 is the coolest and the lowest roller is the hottest.

It is also preferred that the preheat rollers 130, 140, 150, 160, 170 progressively increase in rotational speed from the highest vertical roller 130 to the lowest vertical roller 170, so that the lowest vertical roller 170 is the fastest.

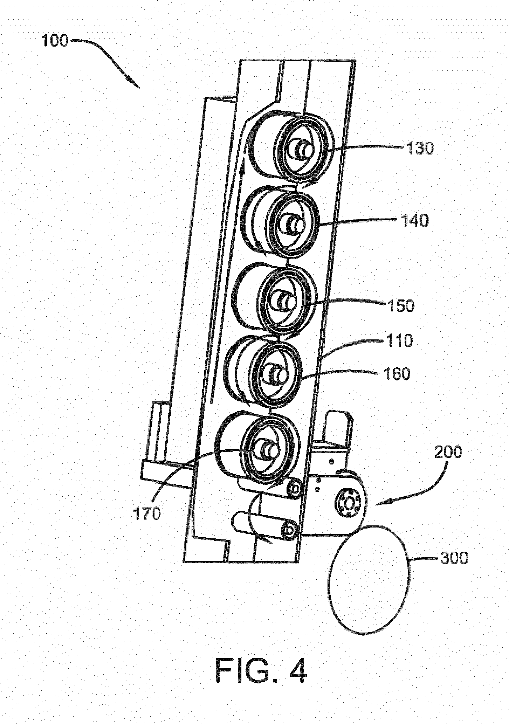

The rubber strip path is wound around the preheat rollers 130, 140, 150, 160, 170 as shown in Figure 4. As the rubber strip is wound around the preheat rollers 130, 140, 150, 160, 170, the increase in roller speed and temperature results in the strip being stretched and thinned to a strip having the desired width and thickness. In a first example, the series of vertically oriented preheat rollers 130, 140, 150, 160, 170 process rubber stock having a 101.6 mm width, 6.35 mm thickness into a 76.2 mm wide, 3.175 mm thick strip of rubber. However, the rubber stock could be basically any size. The strip formed from the strip forming apparatus may be as narrow as 3.175 mm and wider and is not limited in size. Typically, the strips are in the range of 7.62 mm 50.8 mm for tire building applications.

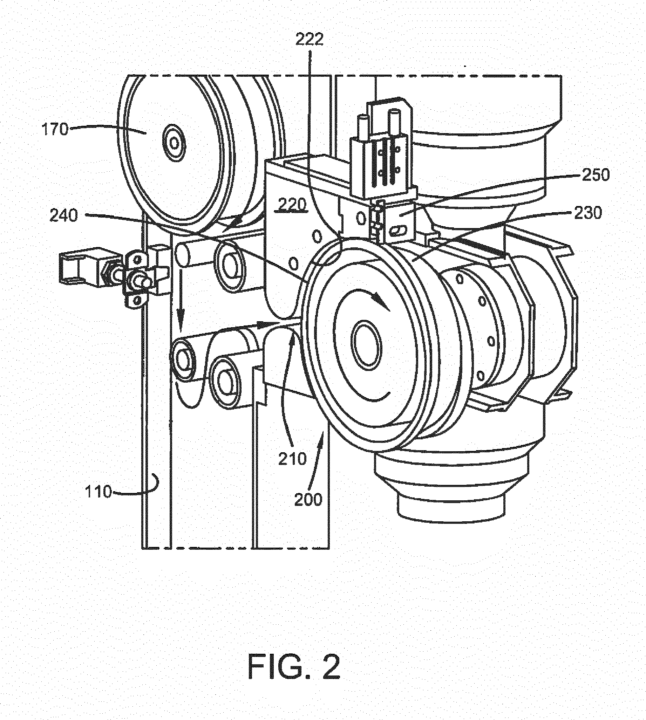

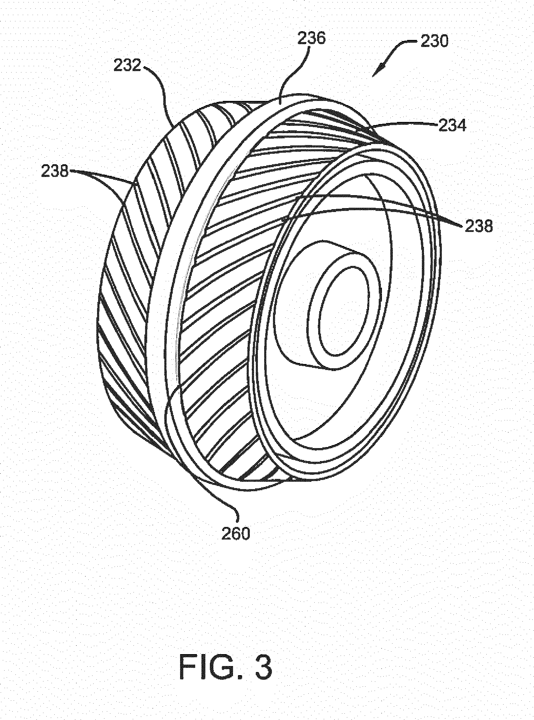

Figure 2 illustrates the path of the rubber strip after exiting the series of vertically oriented preheat rollers 130-170. The rubber strip is fed into the opening 210 of a feedbox of a milltruder 200. The milltruder includes a milltruder head 220 and an application forming roller 230. A channel 240 is formed between the milltruder head 220 and the forming roller 230. Figure 2 only illustrates half of the forming roller 230 for clarity, while Figure 3 illustrates the entire forming roller 230. The channel 240 preferably decreases in area from the inlet to the outlet adjacent a die 250. The rubber is fed into the opening of the channel into engagement with the rotating forming roller and the lower end 222 of the head 220. Preferably, the milltruder head 220 is heated.

Figure 3 illustrates the application forming roller 230. The application forming roller 230 comprises a first conical half 232 and a second conical half 234 separated by a central band 236. The conical halves 232, 234 are arranged so that the largest diameter is adjacent the band 236, while the smallest diameter is axially outward of the band 236. The application roller 230 may additionally optionally comprise a plurality of grooves or serrations 238. The grooves or serrations 238 will increase pressure in die area which will increase output. The application roller 230 may optionally comprise a radial groove 260. The radial groove 260 is used to increase the quality of the edge of the strip. Once rubber fills the groove 260, it will flow the full 360 degrees back to the head. This action will pull any flash away from the rubber strip being applied to a tire building drum leading to a higher quality product.

As the application roller 230 rotates, it pulls rubber between the roller 230 and the milltruder head 220. As the rubber moves toward a die 250, the rubber is compressed and mixed both circumferentially and axially in the channel 240 between the milltruder head 220 and application forming roller 230. The axial mixing/movement is also increased due to the conical shape of the application roller. Since the outer diameter of the roller has a higher surface speed than the smaller diameter of the cone, rubber will tend to migrate to the surfaces with higher surface velocities, i.e. towards the band 236, generating additional mixing and pressure at the die opening. If more work or heat is required to process the rubber, the die 250 can be moved out to allow rubber to form a band around the application roller similar to a mill. This will allow multiple "passes" of rubber between milltruder head and roller, thus increasing work input.

The strip forming apparatus 100 may apply a strip of rubber onto a drum 300 or onto a carcass under construction. The application pressure may be adjusted by adjusting the angle α that the apparatus forms with the vertical direction.

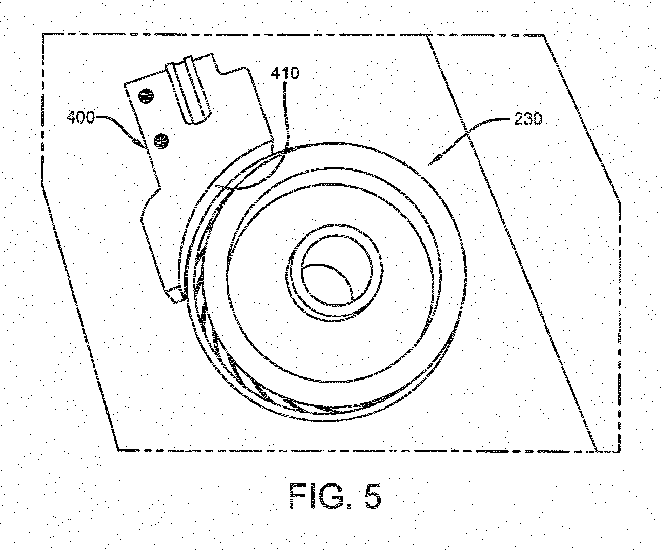

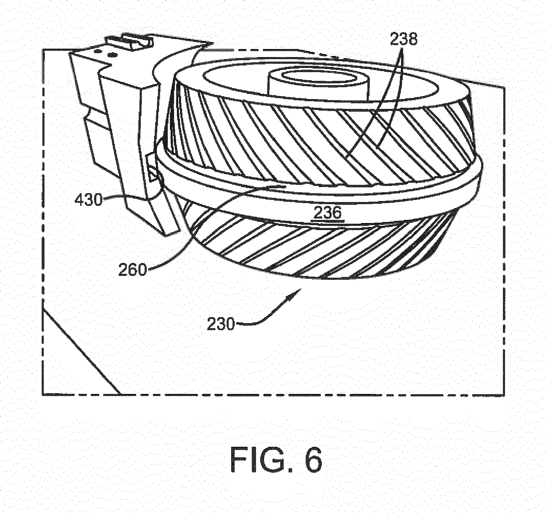

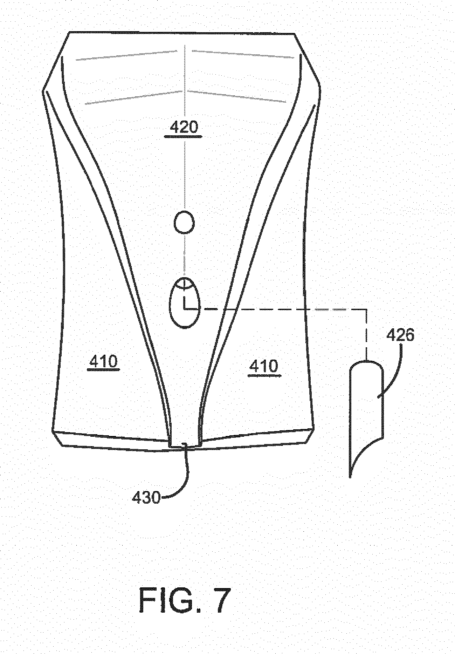

An alternate embodiment of a milltruder head 400 is shown in Figures 5-7. As shown in Figure 7, the milltruder head 400 has a lower surface 410 having a curved surface. The lower surface 410 has a hole 424 for receiving a pin 426 therein. The pin 426 preferably has a beveled upper surface that protrudes from the lower surface 410 of the head. The pin functions to direct the flow of rubber towards a V shaped groove 420 located on the lower surface. The V shaped groove has a narrow portion of the V terminating in a die outlet 430. The die outlet 430 is positioned adjacent the band 236.

The advantages of the system are: Significant reductions in capital costs of a system vs. extrusion. Significantly lower horsepower required (lower energy costs). Since the size of the system is small, multiple strips can be applied to the building drum simultaneously. This reduces capital cost and increases output because fewer drums and less conveying of building drums is required. Since the entire assembly is preferably hanging vertically, stitching application pressures can be more easily achieved vs. present extrusion technology. This leads to reduced trapped air and a higher quality product. Being able to control this stitching pressure also allows for reinforcement to be applied directly to the building drum without pre-calendering, further reducing complexity and costs.

## Claims

1. An apparatus for forming a strip of rubber, the apparatus comprising:
a support frame (110);
at least a first and a second roller (160, 170) mounted on the support frame (110), wherein the first and second rollers are spaced apart from each other;
an application roller (230) located adjacent a head (220, 400); and
a die (250);
wherein a rubber stock channel (240) is formed in a space between the head (220, 400) and an outer surface of the application roller (230); and
wherein the rubber stock channel (240) has an inlet and an outlet, wherein the inlet is located in proximity to the second roller (170), and wherein the outlet is located adjacent the die (250);
**characterized in that** the application roller (230) has a first conical side (232) and a second conical side (234) joined together by a band (236).

2. The apparatus of claim 1 wherein the rubber stock channel (240) is formed in the space between the outer surface of the application roller (230) and an inner surface of the head.

3. The apparatus of claim 1 or 2 wherein the center of the first and the second roller (160, 170) and preferably the center(s) of one or more further rollers (130, 140, 150) located vertically between the first and the second roller (130, 170) are in vertical alignment.

4. The apparatus of at least one of the previous claims wherein the first and the second roller (160, 170) are spaced apart in the range of from 2.54 cm to 12.7 cm, preferably 4 to 7 cm.

5. The apparatus of at least one of the previous claims wherein the channel (240) decreases in area from the inlet to the outlet.

6. The apparatus of at least one of the previous claims wherein the head (220, 400) has a curved lower surface (410).

7. The apparatus of at least one of the previous claims wherein a lower surface (410) of the head (220, 400) has a V shaped groove (420), and, optionally, wherein a narrow end of the V shaped groove (420) terminates in a die outlet (430).

8. The apparatus of claim 7 wherein the die outlet (430) is rectangular shaped.

9. The apparatus of at least one of the previous claims wherein the angle (α) of the apparatus (100) with the vertical axis is adjustable.

10. A method of forming a rubber strip, the method comprising the steps of:
providing an apparatus in accordance with at least one of the previous claims;
threading a rubber stock about the first and the second roller (160, 170) and then through the channel (240) formed between the head (220, 400) and the rotating application rollers (230) and then through the die (250).

11. The method of claim 10 wherein the first roller (160) rotates at a slower speed than the second roller (170) and/or wherein the first roller (160) is heated to a lower temperature than the temperature of the second roller (170).

## Patentansprüche

1. Vorrichtung zum Formen eines Gummistreifens, wobei die Vorrichtung umfasst:
einen Stützrahmen (110) ;
mindestens eine erste und eine zweite Rolle (160, 170), die auf dem Stützrahmen (110) montiert sind, wobei die erste und die zweite Rolle voneinander beabstandet sind ;
eine Auftragsrolle (230), die sich neben einem Kopf (220, 400) befindet; und
eine Düse (250) ;
wobei in einem Raum zwischen dem Kopf (220, 400) und einer Außenfläche der Auftragsrolle (230) ein Kautschukmischungkanal (240) gebildet ist; und
wobei der Kautschukmischungkanal (240) einen Einlass und einen Auslass hat, wobei der Einlass sich in der Nähe der zweiten Rolle (170) befindet, und wobei der Auslass sich neben der Düse (250) befindet;
**dadurch gekennzeichnet, dass** die Auftragsrolle (230) eine erste konische Seite (232) und eine zweite konische Seite (234) hat, die durch ein Band (236) miteinander verbunden sind.

2. Vorrichtung nach Anspruch 1, wobei der Kautschukmischungkanal (240) im Raum zwischen der Außenfläche der Auftragsrolle (230) und einer Innenfläche des Kopfes ausgebildet ist.

3. Vorrichtung nach Anspruch 1 oder 2, wobei der Mittelpunkt der ersten und der zweiten Rolle (160, 170) und vorzugsweise der(die) Mittelpunkt(e) einer oder mehrerer weiteren Rollen (130, 140, 150), die vertikal zwischen der ersten und der zweiten Rolle (130, 170) angeordnet sind, vertikal ausgerichtet sind.

4. Vorrichtung nach mindestens einem der vorhergehenden Ansprüche, wobei die erste und die zweite Rolle (160, 170) im Bereich von 2,54 cm bis 12,7 cm, vorzugsweise 4 bis 7 cm voneinander entfernt sind.

5. Vorrichtung nach mindestens einem der vorhergehenden Ansprüche, wobei der Kanal (240) flächenmäßig vom Einlass zum Auslass abnimmt.

6. Vorrichtung nach mindestens einem der vorhergehenden Ansprüche, wobei der Kopf (220, 400) eine gekrümmte untere Oberfläche (410) hat.

7. Vorrichtung nach mindestens einem der vorhergehenden Ansprüche, wobei eine untere Oberfläche (410) des Kopfes (220, 400) eine V-förmige Nut (420) hat, und, optional, wobei ein schmales Ende der V-förmigen Nut (420) in einem Düsenauslass (430) endet.

8. Vorrichtung nach Anspruch 7, wobei der Düsenauslass (430) rechteckig ist.

9. Vorrichtung nach mindestens einem der vorhergehenden Ansprüche, wobei der Winkel (a) der Vorrichtung (100) mit der vertikalen Achse verstellbar ist.

10. Verfahren zur Bildung eines Gummistreifens, wobei das Verfahren die folgenden Schritte umfasst:
das Bereitstellen einer Vorrichtung gemäß mindestens einem der vorhergehenden Ansprüche ;
das Einziehen einer Kautschukmischung um die erste und die zweite Rolle (160, 170) herum und dann durch den zwischen dem Kopf (220, 400) und den rotierenden Auftragsrollen (230) gebildeten Kanal (240) und dann durch die Düse (250).

11. Verfahren nach Anspruch 10, wobei die erste Rolle (160) mit einer langsameren Geschwindigkeit als die zweite Rolle (170) rotiert und/oder wobei die erste Rolle (160) auf eine niedrigere Temperatur als die Temperatur der zweiten Rolle (170) erwärmt wird.

## Revendications

1. Appareil destiné à la formation d'une bande de caoutchouc, l'appareil comprenant :
un cadre de support (110) ;
au moins un premier et un deuxième rouleau (160, 170) montés sur le cadre de support (110) ; dans lequel le premier et le deuxième rouleau sont espacés l'un de l'autre ;
un rouleau d'application (230) disposé en position adjacente à une tête (220, 400) ; et
une filière (250) ;
dans lequel un canal pour un mélange de caoutchouc (240) est formé dans un espace s'étendant entre la tête (220, 400) et une surface externe du rouleau d'application (230) ; et
dans lequel le canal pour un mélange de caoutchouc (240) possède une entrée et une sortie ; dans lequel l'entrée est disposée à proximité du deuxième rouleau (170) ; et dans lequel la sortie est disposée en position adjacente à la filière (250) ;
**caractérisé en ce que** le rouleau d'application (230) possède un premier côté conique (232) et un deuxième côté conique (234) qui sont joints l'un à l'autre par l'intermédiaire d'une bande (236).

2. Appareil selon la revendication 1, dans lequel le canal pour un mélange de caoutchouc (240) est formé dans l'espace qui s'étend entre la surface externe du rouleau d'application (230) et une surface interne de la tête.

3. Appareil selon la revendication 1 ou 2, dans lequel le centre du premier et du deuxième rouleau (160, 170) et de préférence le (les) centre(s) d'un ou de plusieurs rouleaux supplémentaires (130, 140, 150) qui est/sont disposé(s) à la verticale entre le premier et le deuxième rouleau (130, 170), sont placés dans un alignement vertical.

4. Appareil selon au moins une des revendications précédentes, dans lequel le premier et le deuxième rouleau (160, 170) sont espacés l'un de l'autre dans la plage allant de 2,54 cm à 12,7 cm, de préférence de 4 à 7 cm.

5. Appareil selon au moins une des revendications précédentes, dans lequel le canal pour un mélange de caoutchouc (240) diminue en surface à partir de l'entrée en direction de la sortie.

6. Appareil selon au moins une des revendications précédentes, dans lequel la tête (220, 400) possède une surface inférieure courbe (410).

7. Appareil selon au moins une des revendications précédentes, dans lequel une surface inférieure (410) de la tête (220,400) possède une rainure (420) possédant une configuration en forme de V, et de manière facultative, dans lequel une extrémité étroite de la rainure (420) possédant une configuration en forme de V aboutit dans une sortie de filière (430).

8. Appareil selon la revendication 7, dans lequel la sortie de filière (430) possède une configuration de forme rectangulaire.

9. Appareil selon au moins une des revendications précédentes, dans lequel l'angle (a) que forme l'appareil (100) avec l'axe vertical est réglable.

10. Procédé de formation d'une bande de caoutchouc, le procédé comprenant les étapes dans lesquelles :
on procure un appareil en conformité avec au moins une des revendications précédentes ;
on fait passer une bande de mélange de caoutchouc autour du premier et du deuxième rouleau (160, 170) et ensuite à travers le canal (240) formé entre la tête (220, 400) et les rouleaux d'application rotatifs (230) et ensuite à travers la filière (250).

11. Procédé selon la revendication 10, dans lequel le premier rouleau (160) effectue des rotations à une vitesse inférieure à celle du deuxième rouleau (170) et/ou dans lequel le premier rouleau (160) est chauffé à une température inférieure à la température du deuxième rouleau (170).
